# DEMANDE DE BREVET EUROPEEN

(11) **EP 0 673 666 A1**
(43) Date de publication de la demande: **27.09.1995**
(21) Numéro de dépôt: 95460012.8
(22) Date de dépôt: 14.03.1995
(51) Int. Cl.: B01D 46/24

(54) **Cartouche pour un filtre prévu pour éliminer des particules présentes dans un flux d'air sous pression et un filtre destiné à recevoir une telle cartouche**

(30) Priorité: 23.03.1994 FR 9403631
(71) Demandeur: EFFICIENCE SA, F-35680 Louvigne-de-Bais (FR)
(72) Inventeur: Gewiss, Michel, F-35410 Osse (FR)
(74) Mandataire: Le Guen, Louis François

(57) **Abrégé**

La présente invention concerne une cartouche pour un filtre prévu pour éliminer des particules présentes dans un flux d'air sous pression et constitué d'un caisson (2) comportant un orifice d'entrée (2a) et un orifice de sortie (2b) sur une paroi de fond (2c).

Elle est constituée de deux flasques annulaires (11, 12) en matière plastique souple et d'un élément de filtre (13) dont les extrémités sont respectivement noyées dans lesdits flasques (11, 12). Elle est prévue pour être montée coaxialement sur un tube (30) percé d'une multitude de trous de manière à former un ensemble qui puisse être appliqué contre la paroi de fond (2c) dudit caisson (2), l'orifice de sortie (2b) étant en communication avec l'intérieur dudit tube (30) alors que l'orifice d'entrée (2a) est en communication avec l'extérieur de ladite cartouche (10).

L'invention concerne également un filtre destiné à recevoir une telle cartouche de filtre.

## Description

La présente invention concerne une cartouche pour un filtre prévu pour éliminer des particules présentes dans un flux d'air sous-pression et un filtre destiné à recevoir une telle cartouche. Un tel filtre est par exemple celui qui est utilisé dans une cabine d'application de peinture, notamment d'application de poudre de peinture chargée électrostatiquement.

Dans une telle cabine d'application de peinture, les particules de poudre de peinture sont chargées électrostatiquement par des générateurs haute fréquence et sont pulvérisées sur les pièces à peindre. L'excédent de poudre dans l'air est amené à un filtre à air qui assure la séparation air-poudre et l'air totalement épuré est renvoyé dans l'atelier.

Le flux d'air chargé de la poudre résiduelle et extrait de la cabine est relativement important si bien que les pressions qui s'exercent sur le filtre sont d'intensité relativement élevées.

Après une durée de fonctionnement déterminée, les particules piégées sur le milieu de filtrage de la cartouche rendent le filtre moins efficace si bien qu'il est nécessaire d'en effectuer le changement. Pour faciliter cette opération de changement, on a réalisé des filtres pourvus de cartouches de filtrage et ce sont ces cartouches qui sont changées.

Aussi, les filtres couramment utilisés dans une telle application comprennent une cartouche qui est constituée d'un élément de filtre, par exemple en papier plié en accordéon, qui est logé entre deux tubes coaxiaux métalliques ayant leurs extrémités communes respectivement fermées par des flasques également métalliques. Les tubes coaxiaux sont percés d'une multitude de trous pour le passage de l'air à filtrer. L'ensemble forme une cartouche qui est montée dans un caisson par l'intermédiaire de joints d'étanchéité.

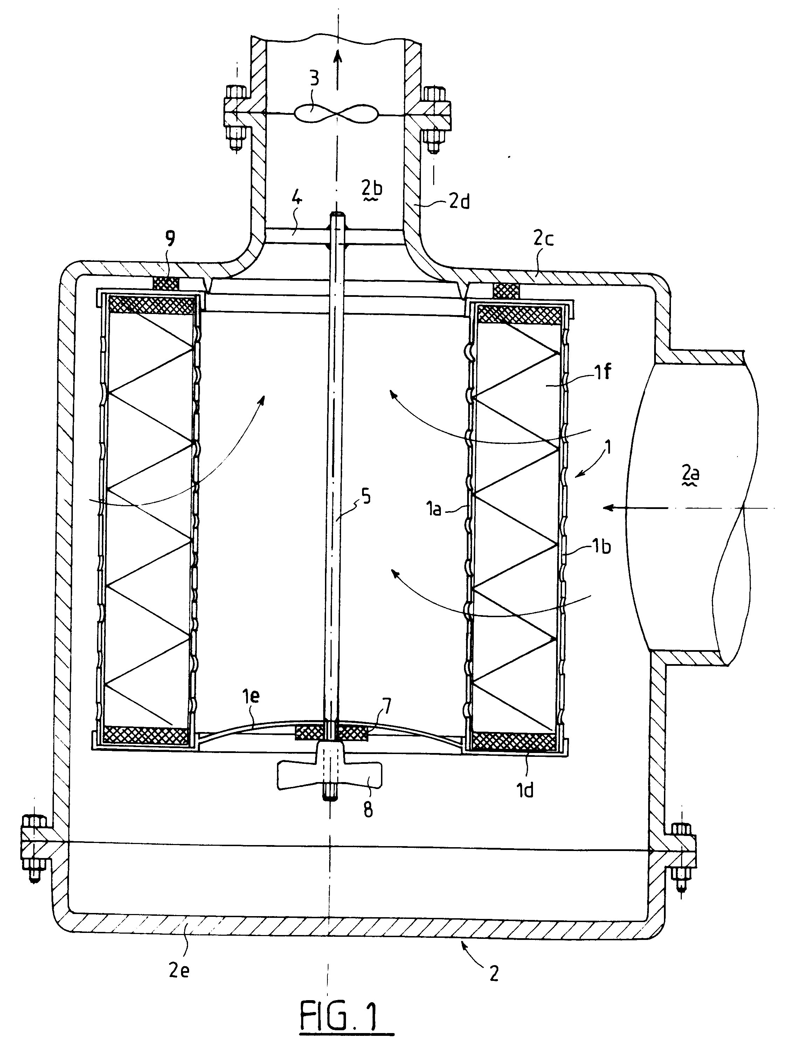

On a représenté à la Fig. 1 une réalisation d'un filtre qui est couramment utilisé. Sur cette Fig. 1, on voit une cartouche 1, avec son tube interne la, son tube externe lb, et les deux flasques lc et 1d. Le flasque 1d, contrairement au flasque lc est fermé dans sa partie centrale par une paroi le. Sur la Fig. 1, on voit également l'élément de filtre 1f dont les extrémités sont collées dans les flasques 1c et 1d.

La cartouche 1 est montée dans un caisson 2 de forme générale cylindrique qui est pourvu d'un orifice d'entrée 2a latérale et d'un orifice de sortie 2b dans l'axe du cylindre sur une paroi d'extrémité 2c. De l'orifice 2b, part une bouche 2d dans laquelle est logée une unité de ventilation 3 représentée à la Fig. 1 par sa seule hélice.

Un couvercle 2e ferme le caisson 2 dans la partie inférieure de la Fig. 1, c'est-à-dire dans la partie opposée à la paroi 2c de laquelle part la bouche 2d. Le couvercle 2e est fixé par des moyens appropriés, tels que des boulons.

Fixée par son extrémité sur un croisillon 4 monté sur la bouche 2d, une tige 5 ayant son extrémité libre filetée est prévue dans l'axe du caisson 2. Elle est légèrement plus longue que la hauteur de la cartouche 1.

Au montage de la cartouche 1 sur le caisson 2, l'extrémité de la cartouche 1 qui est pourvue du flasque lc ouvert dans sa partie centrale (l'extrémité supérieure sur la Fig. 1 ) repose sur la paroi d'extrémité 2c du caisson 2 par l'intermédiaire d'un joint annulaire 9. La paroi le du flasque 1d est passée dans la tige 5. Par l'intermédiaire d'un joint circulaire 7, un écrou 8, par exemple du type écrou à papillon, est vissé sur l'extrémité de la tige 5. Ainsi, la cartouche 1 est pressée sur la paroi 2c et, par conséquent, sur le caisson 2.

Les cartouches de l'art antérieur du type de celle qui vient d'être décrite en relation avec la Fig. 1 sont d'une seule pièce et, par conséquent, une fois usagées, sont jetées sans pouvoir être démontées. Or, ceci pose un problème d'ordre écologique compte tenu du fait qu'elles sont constituées de parties métalliques et de parties polluées par des matières organiques et qu'elles ne sont pas démontables.

Le but de l'invention est de proposer une cartouche pour un filtre du type de celui qui vient d'être décrit, ladite cartouche étant démontable afin de ne pouvoir jeter que les parties polluées par des matières organiques, les parties métalliques étant réutilisées.

A cet effet l'invention concerne une cartouche pour un filtre constitué d'un caisson comportant un orifice d'entrée et un orifice de sortie sur une paroi de fond.

Selon une caractéristique de l'invention, ladite cartouche est constituée de deux flasques annulaires en matière plastique souple et d'un élément de filtre dont les extrémités sont noyées dans lesdits flasques. Elle est de plus prévue pour être montée coaxialement sur un tube percé d'une multitude de trous de manière à former un ensemble qui puisse être appliqué contre la paroi de fond dudit caisson, l'orifice de sortie étant en communication avec l'intérieur dudit tube alors que l'orifice d'entrée est en communication avec l'extérieur de ladite cartouche.

Selon une autre caractéristique de l'invention, au moins l'un desdits flasques est pourvu d'une protubérance annulaire.

Selon une variante de réalisation, les deux dits flasques ont respectivement des protubérances annulaires, lesdites protubérances étant de diamètres différents.

L'invention concerne également un filtre destiné à recevoir une cartouche de filtre et comprenant un caisson comportant un couvercle, un orifice d'entrée et un orifice de sortie sur une paroi de fond.

Selon l'invention, il est équipé d'au moins une cartouche telle que celle qui vient d'être décrite. Chaque cartouche est prévue pour être montée coaxialement sur un tube percé d'une multitude de trous de manière à former un ensemble qui puisse être appliqué contre la paroi de fond dudit caisson, l'orifice de sortie étant en communication avec l'intérieur dudit tube alors que l'orifice d'entrée est en communication avec l'extérieur de ladite cartouche.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe d'un filtre selon l'état de la technique antérieur,
la Fig. 2 est une vue en coupe d'un filtre selon l'invention, équipé d'une cartouche selon l'invention, et
la Fig. 3 est une vue en coupe d'une variante de réalisation d'un filtre 10 selon l'invention.

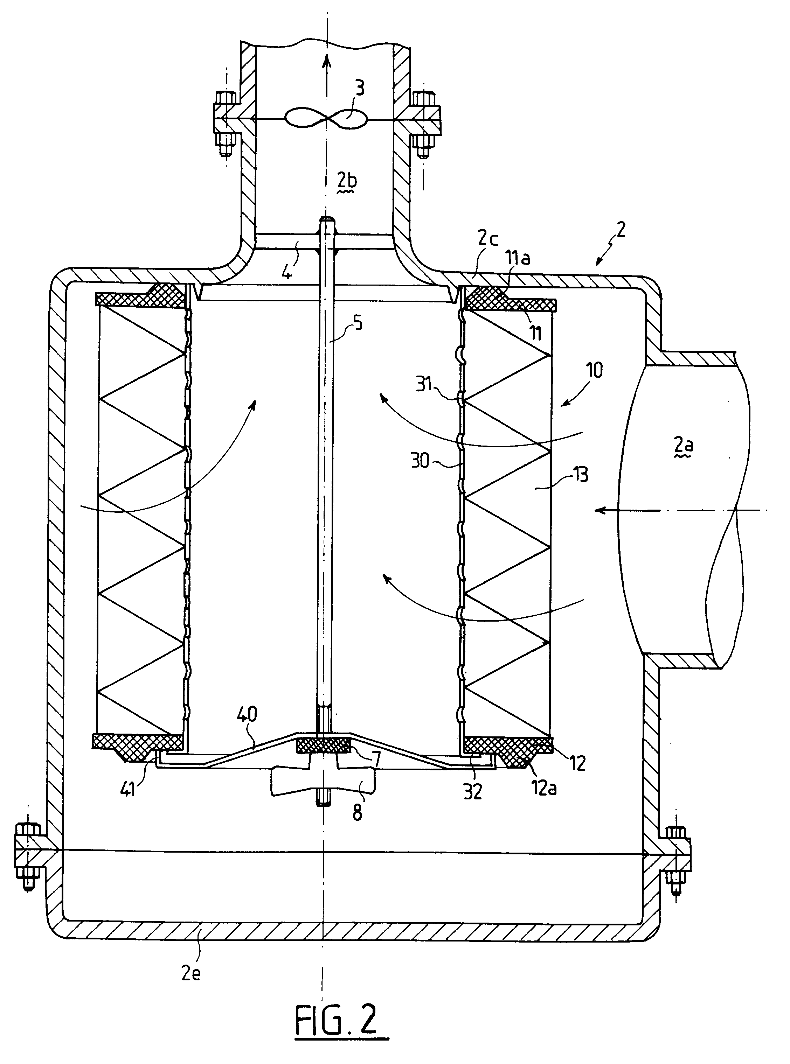

Le filtre représenté à la Fig. 2 est équipé d'une cartouche de filtre selon l'invention.

Dans ce filtre, les mêmes éléments que ceux déjà décrits en relation avec la Fig. 2 portent les mêmes références et ne sont pas de nouveau décrits. En particulier, on reconnaîtra le caisson 2 avec son orifice d'entrée 2a et son orifice de sortie 2b, sa paroi d'extrémité 2c et le couvercle 2e. Ce caisson 2 est également pourvu d'un croisillon 4 sur lequel est montée une tige 5 à l'extrémité libre filetée.

On voit, représenté par le même symbole que sur la Fig. 1, le ventilateur 3.

La cartouche selon l'invention, référencée 10, est constituée uniquement de deux flasques 11 et 12 en matière plastique relativement souple, telle que du polychlorure de vinyle (PVC) ou du polyuréthanne et d'un élément de filtre 13, par exemple constitué de papier relativement poreux plié en accordéon. L'élément de filtre 13 a ses extrémités qui sont noyées, au moment de leur réalisation, dans les flasques 11 et 12.

Chaque flasque 11, 12 est pourvu d'une protubérance annulaire 11a, 12a qui, comme on le verra par la suite, assure la fonction de joint d'étanchéité.

Pour le montage de la cartouche 10, est prévu une tube 30 percé, dans sa paroi latérale, d'une multitude de trous 31. Le tube 30 est pourvu d'une collerette 32 à une extrémité. Il est également prévu un couvercle 40 sensiblement en forme de disque pourvu d'un bord rabattu périphérique 41.

Le montage de la cartouche 10 se fait de la manière suivante. On positionne la cartouche 10 sur le tube 30 de manière que l'un des flasques 12 repose sur la collerette 32. L'ensemble est mis en place sur le caisson 2 de manière que l'un des flasques 11 repose, par sa protubérance 11a, contre la paroi de fond 2c du caisson 2. Puis, on met en place le couvercle 40 de manière que le bord rabattu 41 repose sur le flasque 12 et qu'il soit passé dans la tige 5, puis on serre l'écrou 8 après l'introduction du joint circulaire 7.

On constatera que l'étanchéité est correctement mise en oeuvre et qu'ainsi la cartouche 13 joue parfaitement son rôle de filtre.

Le montage de la cartouche est simple. Le tube 30 assure la fonction de reprise des efforts radiaux qui s'exercent sur l'élément de filtre 13.

Lorsqu'il convient de changer la cartouche 10, on effectue les opérations ci-dessus dans l'ordre inverse et une nouvelle cartouche est montée. On constate que seuls sont jetés les flasques 11 et 12 ainsi que l'élément de filtre 13 et que le tube 30 est quant à lui réutilisé.

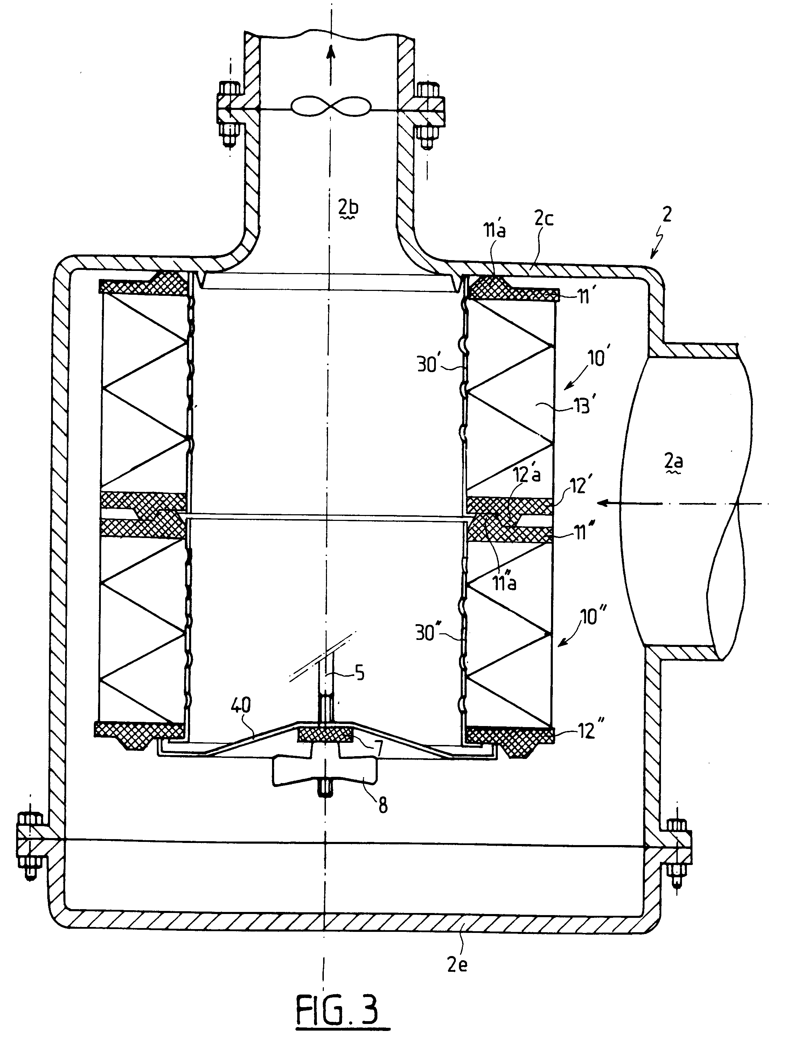

On a représenté à la Fig. 3 un filtre comportant un caisson 2 semblable aux caissons 2 décrits en relation avec les Figs. 1 et 2, mais à l'intérieur duquel on a monté deux cartouches 10' et 10'' selon l'invention. On constate que ces cartouches 10' et 10'' sont respectivement pourvues, à une extrémité, de flasques 11' et 11'' et, à l'autre extrémité, de flasques 12' et 12''. Les cartouches 10' et 10'' sont respectivement montées sur des tubes 30' et 30'' et l'ensemble est monté sur le caisson 2, au moyen de la tige 5, du couvercle 40, de l'écrou 8 et du joint 7, de la manière qui est décrite en relation avec la Fig. 2.

On remarquera que le fait que les protubérances annulaires 11a'' et 12a' soient de diamètres différents permet un meilleur positionnement des deux cartouches 10' et 10'' l'une par rapport à l'autre tout en augmentant encore l'étanchéité entre les deux cartouches 10' et 10''.

## Revendications

**1)** Cartouche pour un filtre prévu pour éliminer des particules présentes dans un flux d'air sous pression et constitué d'un caisson (2) comportant un orifice d'entrée (2a) et un orifice de sortie (2b) sur une paroi de fond (2c), caractérisée en ce qu'elle est constituée de deux flasques annulaires (11, 12) en matière plastique souple et d'un élément de filtre (13) dont les extrémités sont respectivement noyées dans lesdits flasques (11, 12) et en ce qu'elle est prévue pour être montée coaxialement sur un tube (30) percé d'une multitude de trous de manière à former un ensemble qui puisse être appliqué contre la paroi de fond (2c) dudit caisson (2), l'orifice de sortie (2b) étant en communication avec l'intérieur dudit tube (30) alors que l'orifice d'entrée (2a) est en communication avec l'extérieur de ladite cartouche (10).

**2)** Cartouche selon la revendication 1, caractérisée en ce qu'au moins l'un desdits flasques (11, 12) est pourvu d'une protubérance annulaire (11a, 12a).

**3)** Cartouche selon la revendication 2, caractérisée en ce que les deux dits flasques (11, 12) ont respectivement des protubérances annulaires (11a, 12a), lesdites protubérances (11a, 12a) étant de diamètres différents.

**4)** Filtre prévu pour éliminer des particules présentes dans un flux d'air sous pression et destiné à recevoir une cartouche de filtre, ledit filtre comprenant un caisson (2) comportant, un couvercle (2e), un orifice d'entrée (2a) et un orifice de sortie (2b) sur une paroi de fond (2c), caractérisé en ce qu'il est équipé d'au moins une cartouche (10, 10', 10'') selon l'une des revendications précédentes, chaque cartouche (10, 10', 10'') étant prévue pour être montée coaxialement sur un tube (30, 30', 30'') percé d'une multitude de trous de manière à former un ensemble qui puisse être appliqué contre la paroi de fond (2c) dudit caisson (2), l'orifice de sortie (2b) étant en communication avec l'intérieur dudit tube (30, 30', 30'') alors que l'orifice d'entrée (2a) est en communication avec l'extérieur de ladite cartouche (10, 10', 10'').
